# EUROPEAN PATENT SPECIFICATION

(11) **EP 3 412 447 B1**
(45) Date of publication and mention of the grant of the patent: **20.04.2022**
(21) Application number: 18173457.5
(22) Date of filing: 21.05.2018
(51) Int. Cl.: B32B 17/06, B32B 17/10

(54) **PASSIVE RADIATIVE COOLING OF WINDOW STRUCTURES**
PASSIVE STRAHLUNGSKÜHLUNG VON FENSTERSTRUKTUREN
REFROIDISSEMENT RADIATIF PASSIF DE STRUCTURES DE FENÊTRE

(30) Priority: 07.06.2017 US 201715616847
(43) Date of publication of application: 12.12.2018
(73) Proprietor: Palo Alto Research Center, Incorporated, Palo Alto, CA 94304 (US); AGC Automotive Americas R & D, Inc., Ypsilanti, MI 48197 (US)
(72) Inventor: VAN OVERMEERE, Quentin L.C., Mountain View, CA 94041 (US); WANG, Victoria X., Palo Alto, CA 94304 (US); CASSE, Bernard D., Palo Alto, CA 94304 (US)
(74) Representative: Gill Jennings & Every LLP

(56) References cited:
- WO-A1-2016/205717
- WO-A1-2017/151514
- US-A- 4 586 350

## Description

### BACKGROUND

### Field

The present disclosure relates to passive cooling. More specifically, this disclosure relates to passive radiative cooling of transparent structures, such as glass windows.

### Related Art

As electronics and communication technologies advance, and research proceeds in flexible and transparent electronics, there is an increasing demand for transparent materials to perform optical, thermal, mechanical, and/or electrical functions. Particularly, functional glass and transparent materials are needed for applications including automotive sunroofs, windshields, windows, as well as other applications.

For example, glazing with transmittance in the visible spectrum (i.e., optically transparent) and structural functionality are desirable for protection against mechanical impact. Similarly, there is a demand for automotive glazing coatings with functionalities such as reflecting sunlight, embedding antennas, self-defrosting by passing current through a coating, and conserving energy (e.g., in electric vehicles). Such applications have driven research in advanced materials, including glasses.

By contrast, although reducing the cost of cooling with air conditioning (e.g., in a vehicle with a sunroof) is commonplace and widespread, additional cooling technologies based on glazing is highly desirable. When considering the heat balance of a window in a hot climate, there are two major contributions that affect the interior temperature (e.g., inside a car or building). The first contribution is the amount of solar radiation transmitted through the window, which contributes to heating objects in the interior. This is quantified by the solar heat gain coefficient (SHGC) of the window or glazing. Window films or coatings on glass that directly modify the SHGC are commercially available. In fact, in existing active glazing systems for hot climates, thermal management is typically approached in this way, i.e. by decreasing the SHGC.

The second temperature contribution involves a balance between thermal radiation emitted by the window to its surroundings, and thermal radiation absorbed by the windowpane from the window's surroundings.

WO2016/205717 describes a system for radiative cooling including a top layer including one or more polymers, where the top layer has high emissivity in at least a portion of the thermal spectrum and an electromagnetic extinction coefficient of approximately zero, absorptivity of approximately zero, and high transmittance in at least a portion of the solar spectrum, and further includes a reflective layer including one or more metals, where the reflective layer has high reflectivity in at least a portion of the solar spectrum.

WO2017/151514 describes polymer-based selective radiative cooling structure which includes a selectively emissive layer of a polymer or a polymer matrix composite material.

### SUMMARY

One embodiment described herein provides an apparatus for passive cooling via selective radiative emission. This apparatus includes a layered structure comprising a transparent substrate and an exterior selectively emissive coating on the transparent substrate for radiating heat from the substrate. The coating is configured to emit more thermal infrared radiation to the atmosphere than an amount of infrared radiation that can be received by the coating. The structure also includes an interior selectively emissive coating configured to absorb infrared radiation.

In a variation on this embodiment, the coating has a thermal blackbody emissivity coefficient of at least 0.9 corresponding to an infrared radiation wavelength range.

In a variation on this embodiment, the infrared radiation wavelength range comprises wavelengths in an atmospheric transparency window of 8 micrometers to 13 micrometers.

In a variation on this embodiment, the coating includes a polymer.

In a variation on this embodiment, the coating includes one or more polymers selected from the group consisting of: ethyl cellulose, poly ethyl methacrylate (PEMA), poly methyl methacrylate (PMMA), polyvinyl butyral (PVB), cellulose acetate, polyethylene, polypropylene, polyethylene terephthalate (PET), polyethylene naphthalate (PEN), polyesters, polyacrylic acid, polycarbonates, and a copolymer mixture.

In a variation on this embodiment, the transparent substrate comprises a piece of glass, and the chemical coating is coated on the piece of glass.

In a variation on this embodiment, the apparatus further includes a second piece of glass and a second coating on the second piece of glass for radiating additional heat. The second piece of glass is stacked with the first piece of glass.

In a variation on this embodiment, the apparatus further includes one or more layers of reflective coating for reflecting incident sunlight.

In a variation on this embodiment, the transparent substrate is part of a window, an automotive window, or an automotive sunroof.

In a variation on this embodiment, the coating is not coupled to a liquid coolant source or an electrical source.

### BRIEF DESCRIPTION OF THE FIGURES

FIG. 1 shows contributions to heating and cooling in an automotive sunroof.
FIG. 2 shows an operational principle of passive radiative cooling, in accordance with embodiments of the present invention.
FIG. 3 illustrates exemplary polymers and presents a schematic diagram of their vibrational excitations.
FIG. 4A shows an exemplary layered structure of a passive radiative cooling system.
FIG. 4B shows an exemplary layered structure of a passive radiative cooling system.
FIG. 4C shows an exemplary layered structure of a passive radiative cooling system.
FIGs. 4D and 4E show exemplary layered structures of a passive radiative cooling system, according to embodiments of the present invention.
FIG. 5A shows an exemplary emissivity measurement of the passive radiative cooling system, according to one embodiment of the present invention.
FIG. 5B illustrates an exemplary transmittance measurement of the passive radiative cooling system, according to embodiments of the present invention.
FIG. 6 shows exemplary cooling effects, based on experimental results using the passive radiative cooling system.

In the figures, like reference numerals refer to the same figure elements.

### DETAILED DESCRIPTION

### Overview

Embodiments of the present invention provide a system, apparatus, and method for passive cooling of a transparent substrate via selective radiative emission. The disclosed apparatus uses an optically transparent chemical coating that can cool a transparent substrate, such as a window, even while exposed to sunshine, thereby reducing the need for a liquid coolant or electrical source. To do so, embodiments of the present invention use a material that can emit more thermal infrared (IR) radiation than it receives from the atmosphere, even at ambient temperature. In the absence of sunlight, the system can reach a temperature below the ambient one.

By providing passive cooling in glass windows, the system can decrease the interior temperature in an enclosure (such as a room or car interior) without the need for any electricity or liquid coolant. It is estimated that the present system can provide additional cooling capacity compared with conventional window glazing. This cooling effect can be obtained without alteration of the glass' visible-wavelength transmittance or its color. Moreover, the disclosed solution can use thin, inexpensive polymer films, and hence is cost-effective and scalable.

### Contributions to Heating and Cooling

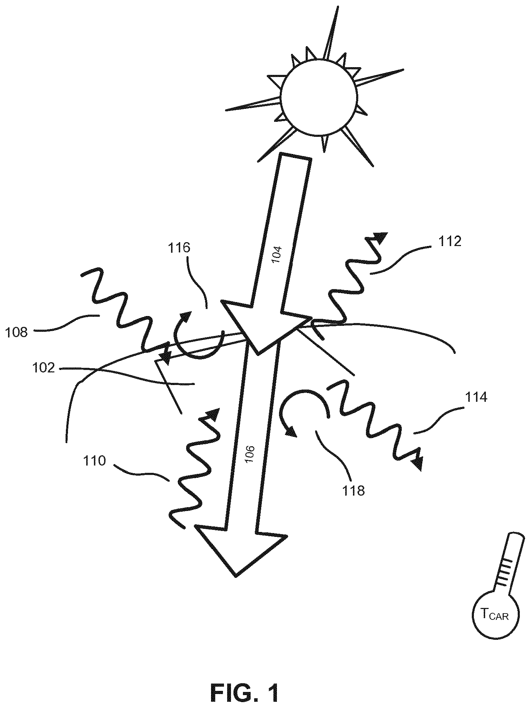

FIG. 1 shows contributions to heating and cooling in an interior space enclosed by an optically transparent window, such as the interior of an automobile with a sunroof 102. Table 1 further summarizes these contributions to heating and cooling in the sunroof 102, and lists their net effect on the temperature inside the car, T_{car}. As shown in FIG. 1, sunlight 104 shines on sunroof 102 and can be absorbed by sunroof 102. Sunlight 106 can also pass through the sunroof to the interior of the car and be absorbed there.

The car, the sunroof, and the car's environment can all radiate thermally (i.e., corresponding to a blackbody radiation spectrum at their current temperatures, typically peaking in the IR range). Thus, thermal radiation 108 from the atmosphere and the car's external surroundings can arrive at sunroof 102, and likewise thermal radiation 110 from the car's interior can arrive at sunroof 102. When sunroof 102 absorbs radiation 108 and 110, it contributes to raising T_{car}. Sunroof 102 can also emit external thermal radiation 112 to the car's environment and internal thermal radiation 114 to the car's interior. Finally, convection currents outside the car 116 and inside the car 118 contribute to lowering T_{car} by carrying heat from the car to the sunroof when T_{car} > T_{glass}, and from the sunroof to the environment when T_{glass} > T_{ambient}.

Table 1 also lists properties of the sunroof that could be engineered to tune each heating and cooling contribution in order to keep T_{car} low. Thus, for the thermal radiation contributions, the thermal emissivity coefficient of the sunroof in the IR wavelength region can affect T_{car}. For sunlight 104 and 106, the sunroofs absorbance and transmittance in the solar wavelengths affects T_{car}. For both the convection and thermal emission contributions, the sunroof's temperature T_{glass} would affect T_{car}. Although T_{glass} is not a property of the sunroof that can be directly engineered, it is determined by a balance between heating and cooling contributions similar to the ones discussed above, and therefore can be influenced by properties like the sunroof's thermal emissivity coefficient and solar absorbance and transmittance.

**Table 1: Contributions to heating and cooling of a car equipped with an automotive sunroof.**

| **Source** | **Contribution** | **Net effect on temperature in car** | **Sunroof glazing variables to tune effect** |
|---|---|---|---|
| Thermal radiation | From sunroof 112, 114 | Lower | Emissivity, T_{glass} |
| | From sky 108 | Raise | Emissivity |
| | From car 110 | Raise | Emissivity |
| Sunlight | Absorbed by glass 104 | Lower | Solar absorbance |
| | Absorbed by interior 106 | Raise | Solar transmittance |
| Convection | Outside 116 | Lower (T_{glass} > T_{ambient}) | T_{glass} |
| | Inside 118 | Lower (T_{glass} < T_{car}) | T_{glass} |

In particular, notice that thermal radiation 112 and 114 from the sunroof carries heat away, and therefore tuning the emissivity could help lower T_{car}, as shown in Table 1. A body's thermal emissivity and absorptivity (also known as absorptance) coefficients are typically equal. Under normal circumstances, thermal emission is balanced by equal thermal absorption, which would bring the sunroof into thermal equilibrium with the radiation from its environment. However, the Earth's atmosphere has a transparency range of wavelengths (also called the atmospheric or sky transparency window), in which the atmosphere has low thermal emissivity and absorptivity. Therefore, by selectively emitting in this wavelength range, the present invention can emit heat that will not be absorbed by its surroundings, engendering a net outflow of heat, as will be described in more detail below.

### Operational Principle of Passive Radiative Cooling

This section describes the operating principles of passive radiative cooling, according to embodiments of the present invention. In general, the system can produce a negative heat flow (resulting in cooling) if the window is engineered to emit more radiation than it absorbs. This can be accomplished if the window emits radiation at wavelengths where the atmosphere is relatively transparent (such as the sky transparency window). Thus, the system operates by virtue of having a selectively enhanced thermal emissivity in an infrared (IR) radiation wavelength range, which may correspond to the Earth's atmospheric transparency window.

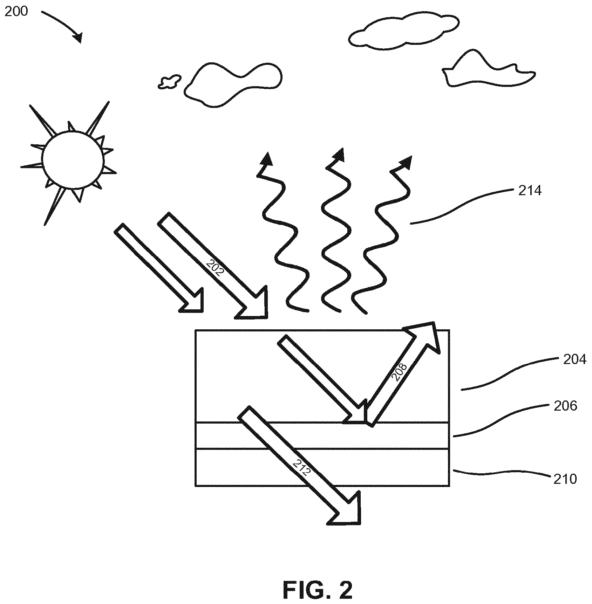

FIG. 2 shows the operational principle of passive radiative cooling, in accordance with embodiments of the present invention. As shown, sunlight 202 can arrive at window or sunroof 200 containing selectively emissive film 204 as part of the passive cooling system. Film 204 can transmit sunlight, which then arrives at low-emissivity reflective coating 206. Low-emissivity coating 206 can reflect broadband sunlight 208, especially in the IR wavelengths. Coating 206 thereby prevents substantial amounts of solar IR radiation from passing through window or sunroof 200 and heating the enclosed room or car. However, visible-wavelength range sunlight 212 can pass through coating 206 and glass substrate 210 into the enclosed space, thereby allowing a user to see through the window.

Meanwhile, selectively emissive film 204 can absorb thermal radiation from both the enclosed space and the exterior environment. Film 204 can be configured to absorb and emit thermal radiation 214 selectively, as described above, in order to maintain a non-equilibrium, directed heat flow, and cool the system.

In particular, the system has a high emissivity coefficient over the atmospheric transparency window, which corresponds to wavelengths 8 µm < λ < 13 µm. Due to these desirable characteristics, the system can emit strong thermal radiation in the atmospheric transparency window, which is a range of wavelengths that is unlikely to be absorbed by the atmosphere or other surroundings. Specifically, since the sky is relatively transparent to radiation in these wavelengths, upward-emitted thermal radiation 214 is likely to continue propagating for great distances, possibly through the atmosphere and on to outer space. As a result, system 200 can maintain a non-equilibrium state, emitting 214 to its environment more thermal radiation than it receives in the atmospheric transparency window.

### Optically Transparent Coating for Passive Radiative Cooling

Implementing the passive radiative cooling principles described above can be based on an appropriate, selectively emitting material for the chemical coating. Ideally, an outer glazing surface with a high emissivity > 0.9 in the atmospheric transparency window can result in better cooling. It is frequently assumed that glass, having a thermal emissivity coefficient of 0.84, is effective at passive radiative cooling. Yet despite its high thermal emissivity, glass selectively emits at wavelengths of 6.6-8.2 µm. This wavelength range is practically outside the 8-13 µm atmospheric transparency window, so glass' passive radiative cooling effect is suboptimal.

Embodiments of the present invention improve significantly over existing systems by implementing the passive radiative cooling principles described above with inexpensive materials, without any need for complex techniques such as lithography. Moreover, the present system can achieve superior passive cooling to other systems, can cool effectively even when exposed to intense sunlight, and is optically transparent.

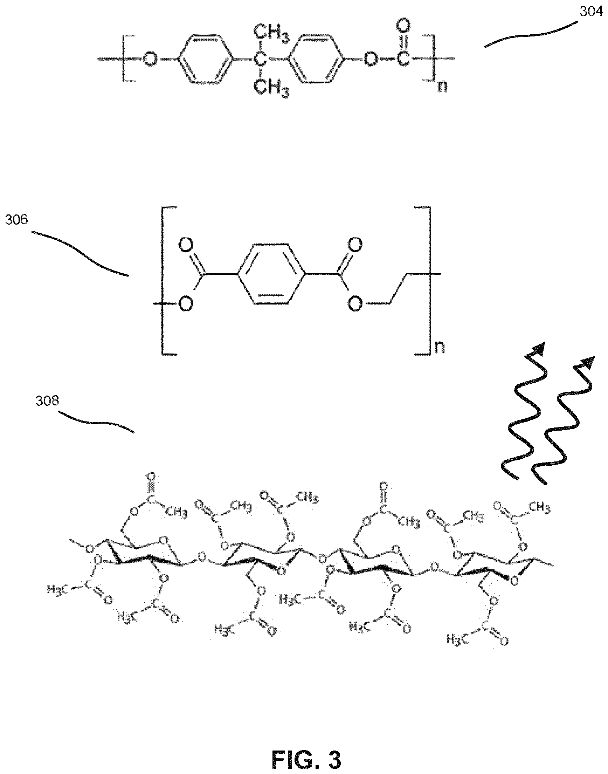

The system can achieve these results by using a chemical coating containing selectively emissive polymers. FIG. 3 illustrates exemplary polymers and presents a schematic diagram of their vibrational excitations. As shown, polymers such as polycarbonate 304, polyethylene terephthalate (PET) 306, and cellulose acetate 308 have specific vibrational spectra. These spectra correspond to specific frequencies at which the molecular structures of the polymers have vibrational modes. Therefore, when excited thermally, polymers such as 304, 306, and 308 can emit IR radiation at these frequencies.

For passive radiative cooling, a desirable polymer film can have high visible transmittance, low solar absorbance, and average emissivity > 0.9 in the 8-13 µm sky transparency window. Examples of polymers satisfying these requirements are PET, cellulose acetate, polycarbonate and ethyl cellulose. (Note that these polymers have high emissivity > 0.9 weighted for thermal radiation from inside the room). Specifically, in various embodiments, the selectively emissive chemical coating may include one or more of: polycarbonate, PET, polymethyl methacrylate, polyacrylic acid, polyethylene, polypropylene, cellulose acetate, ethyl cellulose, and a copolymer mixture. Note that the choice of an ideal polymer might depend on the intended temperature of the pane and atmospheric conditions. In some cases, one might want a broadband emitter. If other cases, one might want an emitter that selectively emits in the 8-13 µm window.

In one embodiment, the system can contain a polymer film on the outer surface of the glazing, i.e. facing the sky or exterior environment. The thickness of the polymer may range from 5 µm to 2000 µm. (Note that the polymer film thickness is a performance-determining factor, and thicknesses in the range 20 µm to 500 µm have been shown to work well). The system may be arranged into a layered structure containing the selectively emissive film, the glazing, and other components, as discussed below.

### Layered Structure of the Passive Radiative Cooling System

This section describes details of the structure of the present system, including how the selectively emissive coating can be constructed.

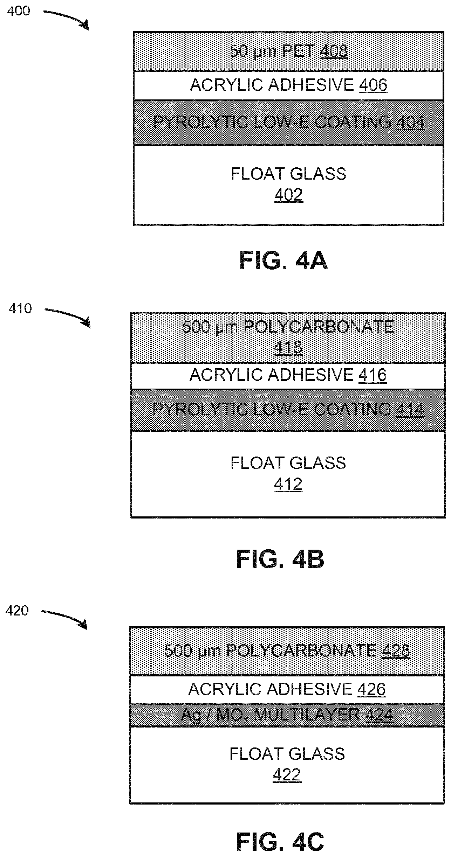

FIG. 4A shows an exemplary layered structure 400 of a passive radiative cooling system. As shown, structure 400 contains a float glass substrate 402, which may be a part of a window, automotive sunroof, etc. Adjacent to substrate 402, structure 400 contains a layer of pyrolytic low-emissivity coating 404. Pyrolytic low-emissivity coating 404 may contain a transparent conducting oxide (TCO) such as fluorine doped tin oxide (FTO), or another low-emissivity coating. Structure 400 then contains an acrylic adhesive 406 to bond the selectively emissive chemical coating 408 to the structure. Finally, the structure contains a layer (e.g., 50 µm) of PET 408 as the selectively emissive chemical coating. Note that this coating is typically located closest to the exterior face of the window, i.e. facing the sky.

FIG. 4B shows an exemplary layered structure 410 of a passive radiative cooling system. Note that the primary difference between structures 400 and 410 is that structure 410 contains a 500 µm layer of polycarbonate 418 as the selectively emissive chemical coating, instead of 50 µm of PET. Structure 410 contains float glass substrate 412, which may be a part of a window, etc. Structure 410 contains a layer of pyrolytic low-emissivity coating 414 adjacent to glass 412. Structure 410 further contains an acrylic adhesive 416 and a layer (e.g., 500 µm) of polycarbonate 418 as the selectively emissive chemical coating.

FIG. 4C shows an exemplary layered structure 420 of a passive radiative cooling system. Instead of a pyrolytic low-emissivity coating such as FTO, structure 420 may contain an infrared reflective thin metal multilayer coating 424. Such a coating can reflect a high proportion of the incident sunlight, thereby producing significant additional cooling. While coating 424 can be strongly reflective at solar infrared wavelengths, the system can nevertheless have strong absorption at thermal IR wavelengths, particularly those in the sky transparency window.

Structure 420 contains float glass substrate 422, and adjacent to float glass 422 contains the thin metal multilayer 424. Structure 420 also contains acrylic adhesive 426 and polycarbonate layer 428 as the selectively emissive chemical coating.

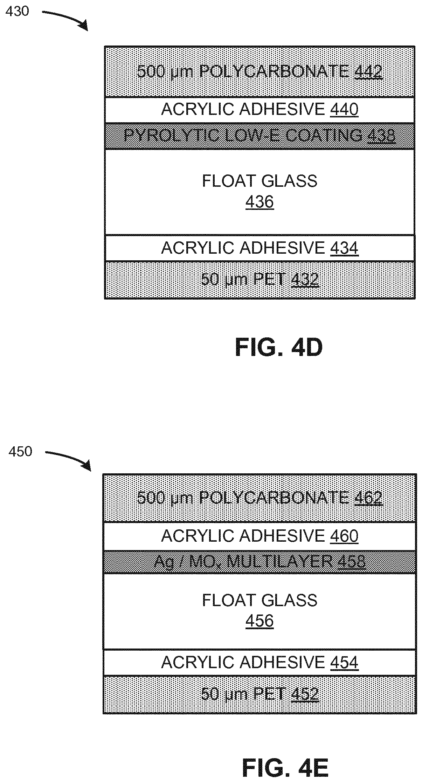

FIGs. 4D and 4E show exemplary layered structures 430 and 450 of a passive radiative cooling system, according to embodiments of the present invention. Structures 430 and 450 are similar to structures 410 and 420, respectively. However, in addition to the exterior selectively emissive coating, structures 430 and 450 contain an additional selectively emissive PET coating on the inside (shown as the bottom) of the respective layer stacks. These additional coatings function to absorb additional IR radiation from the inside enclosure (e.g., the interior of a car or room enclosed by the present invention) and can significantly enhance the system's net cooling effect. The layer structure for the inner coating can be similar to the outer one.

In one embodiment, structure 430 can contain an interior selectively emissive chemical coating layer 432 (e.g., 50 µm of PET), and a layer of acrylic adhesive 434 to adhere coating 432 to the structure. Structure 430 also contains float glass 436 and a layer of pyrolytic low-emissivity coating 438. In addition, structure 430 can contain another acrylic adhesive 440 and a layer (e.g., 500 µm) of polycarbonate 442 as the exterior selectively emissive chemical coating.

Structure 450 can contain an interior selectively emissive chemical coating layer 452 (e.g., 50 µm of PET), and a layer of acrylic adhesive 454 to adhere coating 452 to the structure. Structure 450 can also contain float glass 456, and adjacent to float glass 456 can contain thin metal multilayer 458. Structure 450 further contains acrylic adhesive 460 and polycarbonate layer 462 (e.g., 500 µm) as the selectively emissive chemical coating.

In some embodiments, the layer structures may also contain a thin, protective outer glass layer, e.g. 0.5-2 mm of alkali-aluminosilicate based toughened glass glass or float glass, to prevent abrasion. By protecting the polymer from being damaged by scratching, impacts, etc., this additional glass can improve the system's durability. Such protective layers would be located outermost in the layer structure (i.e., at the top of the structures shown in FIGs. 4A-4E). When sufficiently thin, such outer glass layers can be included, while still maintaining the desired cooling properties of the selectively emissive coating. Note that the aforementioned glass types are often found to be non-transparent in the wavelength range greater than 5 µm, which might not be ideal for infrared transmission. For more optimized thermal performance, one can use a more infrared-transparent glass that is also transparent in the visible wavelength range, such as calcium fluoride (CaF₂) glass.

In some embodiments, the layer structures as in FIGs. 4A-4E can be assembled by applying the polymer film directly onto the glass (by spin coating, doctor blading, slotted die coating, etc.). Optionally, the structures can be assembled by attaching the film to the glass with acrylic adhesive (e.g., optical-grade clear acrylic adhesives), as shown.

### Characteristics and Performance of the Passive Radiative Cooling System

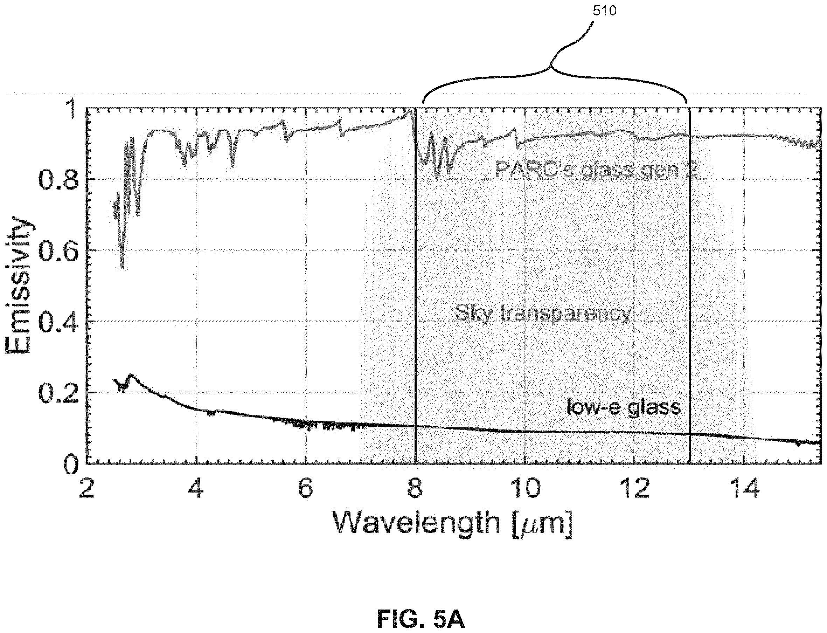

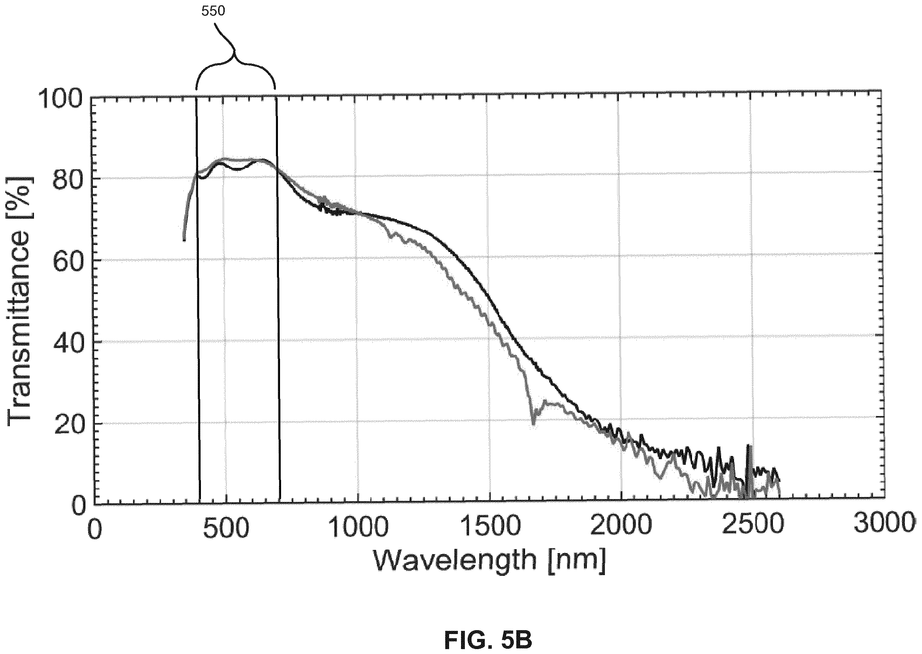

FIG. 5A shows an exemplary emissivity measurement of the passive radiative cooling system, according to one embodiment of the present invention. As shown in FIG. 5, the system has a high thermal blackbody emissivity coefficient σ > 0.8 over a range of wavelengths 3 µm < λ < 15 µm. In particular, σ is high over the atmospheric transparency window 510, which has wavelengths 8 µm < λ < 13 µm. Due to these desirable properties, the system can emit thermal radiation strongly in the window 510, a range of wavelengths that is unlikely to be absorbed by the atmosphere or other surroundings. As a result, the system can maintain a non-equilibrium state, emitting more thermal radiation to its environment than it receives in the atmospheric transparency window.

In some embodiments, the system does not need to maintain a uniformly high emissivity throughout the entire spectrum of relevant wavelengths. (This relevant region may be roughly identified as the solar spectrum, 250 nm to 2.5 µm, through the IR thermal wavelengths, 5 µm to 20 µm). Specifically, the system is transparent to visible light, in order to allow users to see through the window or other glazing. FIG. 5B illustrates an exemplary transmittance measurement of the passive radiative cooling system, according to embodiments of the present invention. Also shown is the range of visible wavelengths 550, running from 400 nm to 700 nm. As shown, the system has a high transmittance coefficient of greater than 80% in the visible spectrum.

Together, FIGs. 5A and 5B demonstrate that the system can have high transmittance in the visible spectrum 550, while simultaneously having high emissivity in the atmospheric transparency window 510. This unique combination of properties allows the system to perform better than existing systems at passive cooling, while simultaneously being optically transparent.

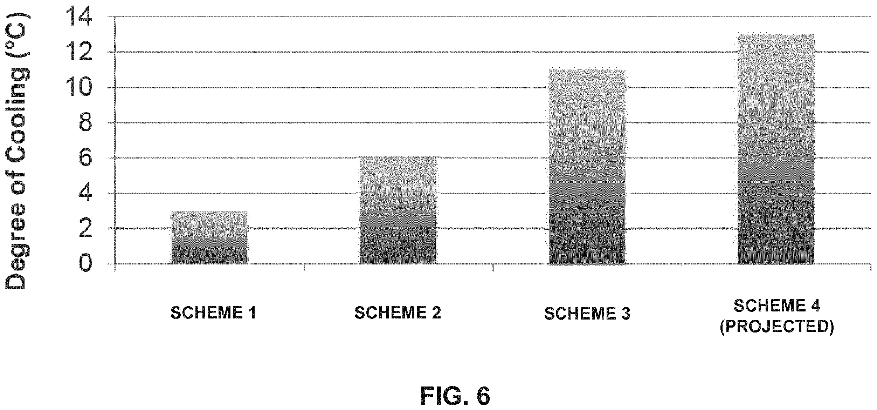

FIG. 6 shows exemplary cooling effects, based on experimental results using the passive radiative cooling system. As shown, several schemes are possible for the structure of the passive radiative cooling system. Scheme 1 makes use of a thin layer (e.g., 50 µm) of PET as the selectively emissive chemical coating and contains a layer of pyrolytic low-emissivity coating, as in example structure 400 shown in FIG. 4A. Scheme 2 instead uses a thicker layer (e.g., 500 µm) of polycarbonate as the chemical coating, and also contains a layer of pyrolytic low-emissivity coating, as in structure 410 shown in FIG. 4B. Scheme 3 contains the thicker layer of polycarbonate as the chemical coating, but contains a reflective thin metal multilayer coating instead of the pyrolytic low-emissivity coating, as in exemplary structure 420 shown in FIG. 4C. Finally, scheme 4 contains both an exterior and an interior layer of selectively emissive coating. Scheme 4 can further contain either pyrolytic low-emissivity coating, as in structure 430 shown in FIG. 4D, or reflective thin metal multilayer coating, as in structure 450 shown in FIG. 4E.

As shown in FIG. 6, schemes 1 through 3 have been measured to achieve from 3° to 11° C (20° F) cooling in sunlight, compared to a control system. Scheme 4 has been measured to achieve 2° C additional cooling (not shown) relative to scheme 2 in the embodiment of FIG. 3D with top and bottom layers of high-emissivity chemical coating and a layer of pyrolytic low-emissivity coating/FTO. Scheme 4 is likewise projected to achieve a total of 13° C (23° F) cooling vs. the control, in the exemplary embodiment of FIG. 4E with top and bottom layers of high-emissivity coating and an optically reflective thin metal multilayer coating. Thus, the present invention achieves extraordinary cooling of a transparent substrate in ambient sunlight, without input of electricity or liquid coolants required.

### Exemplary Applications

While this disclosure has focused on an example of an automotive sunroof, the passive cooling system and methods are not limited by the present disclosure, and may be used for any application. For example, the disclosed passive cooling system may be used as part of an automotive windshield or rear or side window, a commercial or residential window, a transparent or translucent wall or structure, transparent electronics, glasses, sunglasses or other wearable items, a container for food or biological matter, or any application known or later developed.

An advantage of the disclosed passive cooling system is that it can be manufactured with inexpensive materials, without complex techniques such as lithography. The passive cooling system can be manufactured either by applying the polymer film directly onto glass (e.g., by spin coating), or attaching to the glass with acrylic adhesive (e.g., optical-grade clear acrylic adhesives from 3M). The manufacturing methods for the optional inner surface are similar.

## Claims

1. An apparatus for passive cooling via selective radiative emission, comprising a layered structure 430, the layered structure 430 comprising:
a transparent substrate 436; and
an exterior selectively emissive coating 442 positioned on the transparent substrate 436, wherein the coating 442 is configured to emit more thermal infrared radiation to the atmosphere than an amount of infrared radiation that can be received by the coating 442, and
an interior selectively emissive coating 432 configured to absorb infrared radiation.

2. The apparatus of claim 1, wherein the coating 442 has a thermal blackbody emissivity coefficient of at least 0.9 corresponding to an infrared radiation wavelength range.

3. The apparatus of claim 2, wherein the infrared radiation wavelength range comprises wavelengths in an atmospheric transparency window of 8 micrometers to 13 micrometers.

4. The apparatus of claim 1, wherein the coating 442 includes a polymer.

5. The apparatus of claim 1, wherein the chemical coating 442 includes one or more polymers selected from the group consisting of: ethyl cellulose, poly ethyl methacrylate (PEMA), poly methyl methacrylate (PMMA), polyvinyl butyral (PVB), cellulose acetate, polyethylene, polypropylene, polyethylene terephthalate (PET), polyethylene naphthalate (PEN), polyesters, polyacrylic acid, polycarbonates, and a copolymer mixture.

6. A method for passive cooling via selective radiative emission, the method comprising:
applying an exterior selectively emissive coating 442 on a transparent substrate 436, wherein the coating 442 is configured to emit more thermal infrared radiation to the atmosphere than an amount of infrared radiation that can be received by the coating 442; and
applying an interior selectively emissive coating 432 on the transparent substrate 436, the interior selectively emissive coating 432 configured to absorb infrared radiation.

7. The method of claim 6, wherein the coating 442 has a thermal blackbody emissivity coefficient of at least 0.9 corresponding to an infrared radiation wavelength range.

8. The method of claim 7, wherein the infrared radiation wavelength range comprises wavelengths in an atmospheric transparency window of 8 micrometers to 13 micrometers.

9. The method of claim 6, wherein the coating 442 includes a polymer.

10. The method of claim 6, wherein the coating 442 includes one or more polymers selected from the group consisting of: ethyl cellulose, poly ethyl methacrylate (PEMA), poly methyl methacrylate (PMMA), polyvinyl butyral (PVB), cellulose acetate, polyethylene, polypropylene, polyethylene terephthalate (PET), polyethylene naphthalate (PEN), polyesters, polyacrylic acid, polycarbonates, and a copolymer mixture.

11. The method of claim 6, wherein the transparent substrate 436 comprises a piece of glass.

## Patentansprüche

1. Vorrichtung zur passiven Kühlung durch selektive Strahlungsemission, umfassend eine geschichtete Struktur (430), wobei die geschichtete Struktur (430) umfasst:
ein transparentes Substrat (436) und
eine äußere selektiv emittierende Beschichtung (442), die auf dem transparenten Substrat (436) angeordnet ist, wobei die Beschichtung (442) so konfiguriert ist, dass sie mehr thermische Infrarotstrahlung an die Atmosphäre emittiert als eine Menge an Infrarotstrahlung, die von der Beschichtung 442 empfangen werden kann, und
eine innere selektiv emittierende Beschichtung (432), die so konfiguriert ist, dass sie Infrarotstrahlung absorbiert.

2. Vorrichtung nach Anspruch 1, wobei die Beschichtung (442) einen thermischen Schwarzköperemissionskoeffizienten von mindestens 0,9 aufweist, der einem Wellenlängenbereich der Infrarotstrahlung entspricht.

3. Vorrichtung nach Anspruch 2, wobei der Wellenlängenbereich der Infrarotstrahlung Wellenlängen in einem atmosphärischen Transparenzfenster von 8 Mikrometern bis 13 Mikrometern umfasst.

4. Vorrichtung nach Anspruch 1, wobei die Beschichtung (442) ein Polymer enthält.

5. Vorrichtung nach Anspruch 1, wobei die chemische Beschichtung (442) ein oder mehrere Polymere umfasst, ausgewählt aus der Gruppe bestehend aus Ethylcellulose, Polyethylmethacrylat (PEMA), Polymethylmethacrylat (PMMA), Polyvinylbutyral (PVB), Celluloseacetat, Polyethylen, Polypropylen, Polyethylenterephthalat (PET), Polyethylennaphthalat (PEN), Polyestern, Polyacrylsäure, Polycarbonaten und einer Copolymermischung.

6. Verfahren zur passiven Kühlung mittels selektiver Strahlungsemission, wobei das Verfahren umfasst:
Aufbringen einer äußeren selektiv emittierenden Beschichtung (442) auf ein transparentes Substrat (436), wobei die Beschichtung (442) so konfiguriert ist, dass sie mehr thermische Infrarotstrahlung an die Atmosphäre emittiert als eine Menge an Infrarotstrahlung, die von der Beschichtung (442) empfangen werden kann, und
Aufbringen einer inneren selektiv emittierenden Beschichtung (432) auf das transparente Substrat (436), wobei die innere selektiv emittierende Beschichtung (432) so konfiguriert ist, dass sie Infrarotstrahlung absorbiert.

7. Verfahren nach Anspruch 6, wobei die Beschichtung (442) einen thermischen Schwarzkörperemissionskoeffizienten von mindestens 0,9 aufweist, der einem Wellenlängenbereich der Infrarotstrahlung entspricht.

8. Verfahren nach Anspruch 7, wobei der Wellenlängenbereich der Infrarotstrahlung Wellenlängen in einem atmosphärischen Transparenzfenster von 8 Mikrometern bis 13 Mikrometern umfasst.

9. Verfahren nach Anspruch 6, wobei die Beschichtung (442) ein Polymer enthält.

10. Verfahren nach Anspruch 6, wobei die Beschichtung (442) ein oder mehrere Polymere enthält, ausgewählt aus der Gruppe, bestehend aus Ethylcellulose, Polyethylmethacrylat (PEMA), Polymethylmethacrylat (PMMA), Polyvinylbutyral (PVB), Celluloseacetat, Polyethylen, Polypropylen, Polyethylenterephthalat (PET), Polyethylennaphthalat (PEN), Polyestern, Polyacrylsäure, Polycarbonaten und einer Copolymermischung.

11. Verfahren nach Anspruch 6, wobei das transparente Substrat (436) ein Stück Glas umfasst.

## Revendications

1. Dispositif de refroidissement passif via une émission radiative sélective, comprenant une structure stratifiée 430, la structure stratifiée 430 comprenant :
un substrat transparent 436 ; et
un revêtement extérieur émissif sélectivement 442 positionné sur le substrat transparent 436, lequel revêtement 442 est configuré pour émettre davantage de rayonnement infrarouge thermique vers l'atmosphère que la quantité de rayonnement infrarouge qui peut être reçue par le revêtement 442, et
un revêtement intérieur émissif sélectivement 432 configuré pour absorber le rayonnement infrarouge.

2. Dispositif selon la revendication 1, dans lequel le revêtement 442 a un coefficient d'émissivité de corps noir thermique d'au moins 0,9 correspondant à une gamme de longueurs d'onde de rayonnement infrarouge.

3. Dispositif selon la revendication 2, dans lequel la gamme de longueurs d'onde de rayonnement infrarouge comprend des longueurs d'onde dans une fenêtre de transparence atmosphérique de 8 micromètres à 13 micromètres.

4. Dispositif selon la revendication 1, dans lequel le revêtement 442 contient un polymère.

5. Dispositif selon la revendication 1, dans lequel le revêtement chimique 442 contient un ou plusieurs polymères choisis dans le groupe constitué par : l'éthylcellulose, le poly(méthacrylate d'éthyle) (PEMA), le poly(méthacrylate de méthyle) (PMMA), le poly(butyral de vinyle) (PVB), l'acétate de cellulose, le polyéthylène, le polypropylène, le poly(téréphtalate d'éthylène) (PET), le poly(naphtalate d'éthylène) (PEN), les polyesters, le poly(acide acrylique), les polycarbonates, et un mélange copolymère.

6. Procédé de refroidissement passif via une émission radiative sélective, le procédé comprenant :
l'application d'un revêtement extérieur émissif sélectivement 442 sur un substrat transparent 436, dans laquelle le revêtement 442 est configuré pour émettre davantage de rayonnement infrarouge thermique vers l'atmosphère que la quantité de rayonnement infrarouge qui peut être reçue par le revêtement 442 ; et
l'application d'un revêtement intérieur émissif sélectivement 432 sur le substrat transparent 436, le revêtement intérieur émissif sélectivement 432 étant configuré pour absorber le rayonnement infrarouge.

7. Procédé selon la revendication 6, dans lequel le revêtement 442 a un coefficient d'émissivité de corps noir thermique d'au moins 0,9 correspondant à une gamme de longueurs d'onde de rayonnement infrarouge.

8. Procédé selon la revendication 7, dans lequel la gamme de longueurs d'onde de rayonnement infrarouge comprend des longueurs d'onde dans une fenêtre de transparence atmosphérique de 8 micromètres à 13 micromètres.

9. Procédé selon la revendication 6, dans lequel le revêtement 442 contient un polymère.

10. Procédé selon la revendication 6, dans lequel le revêtement chimique 442 contient un ou plusieurs polymères choisis dans le groupe constitué par : l'éthylcellulose, le poly(méthacrylate d'éthyle) (PEMA), le poly(méthacrylate de méthyle) (PMMA), le poly(butyral de vinyle) (PVB), l'acétate de cellulose, le polyéthylène, le polypropylène, le poly(téréphtalate d'éthylène) (PET), le poly(naphtalate d'éthylène) (PEN), les polyesters, le poly(acide acrylique), les polycarbonates, et un mélange copolymère.

11. Procédé selon la revendication 6, dans lequel le substrat transparent 436 comprend un morceau de verre.
